# EUROPÄISCHE PATENTANMELDUNG

(11) **EP 4 047 927 A1**
(43) Veröffentlichungstag der Anmeldung: **24.08.2022**
(21) Anmeldenummer: 22154884.5
(22) Anmeldetag: 03.02.2022
(51) Int. Cl.: H04N 7/18

(54) **KAMERASYSTEM FÜR EIN KÜHLGERÄT ODER KÜHLGERÄTSYSTEM**

(30) Priorität: 23.02.2021 BE 202105123
(71) Anmelder: Miele & Cie. KG, 33332 Gütersloh (DE)
(72) Erfinder: Lörcks, Sebastian, 59505 Bad Sassendorf (DE); Neumann, Richard, 32805 Hornbad-Meinberg (DE)

(57) **Zusammenfassung**

Kamerasystem für ein Kühlgerät oder Kühlgerätsystem mit einem Kühlgerät, aufweisend einen Gehäusekörper, einen im Gehäusekörper ausgebildeten Lagerraum zum Kühlen von Kühlwaren, und eine Tür, die am Gehäusekörper angeordnet ist und die einen Zugriff in den Lagerraum mit den Kühlwaren erlaubt, wobei das Kamerasystem aufweist
- eine Kamera, die derart angeordnet und eingerichtet ist, um eine Bilderfolge aus dem Lagerraum aufzunehmen;
- ein Rechenmodul (1), das derart konfiguriert ist, eine Vorverarbeitung der von der Kamera aufgenommenen Bilderfolge unter Erzeugen von Zwischendaten auszuführen,
- ein weiteres Rechenmodul (2), das konfiguriert ist, ein Erkennen der Kühlwaren anhand der Zwischendaten auszuführen; und
- ein Kommunikationsmodul und/oder eine Schnittstelle, das oder die ausgebildet ist, mit einem externen Gerät und/oder einem Benutzer bidirektional zu kommunizieren.

## Beschreibung

Die Erfindung betrifft ein Kamerasystem für einen Haushaltslagerort für Waren, bevorzugt ein Kühlgerät und ein Kühlgerätsystem. Insbesondere betrifft die Erfindung ein Kühlgerät, allein oder als Element eines Kühlgerätsystems, mit einem Gehäusekörper und einem im Gehäusekörper ausgebildeten Lagerraum zum Kühlen von Kühlwaren, einer Tür, die am Gehäusekörper angeordnet ist, und die einen Zugriff in den Lagerraum mit den Kühlwaren erlaubt und einer Kamera, die derart angeordnet und eingerichtet ist, um Bilder aus dem Lagerraum aufzunehmen, sowie ein Kühlgerätsystem mit einem derartigen Kühlgerät, wobei das Kühlgerät bzw. das Kühlgerätsystem ausgebildet ist, die von der Kamera aufgenommen Bilder zu analysieren und anhand der Analyse in dem Kühlgerät befindliche Kühlwaren zu erkennen.

Das Kamerasystem kann Bestandteil eines Kühlgeräts wie eines Kühlschranks sein, alternativ aber auch eine nicht integrierte Nachrüstlösung für ein Kühlgerät oder andere Haushalts-Lagerorte wie Lagerschränke und -Regale etc. Im Folgenden wird beispielhaft für die bevorzugte Ausführungsform mit Kühlgeräten der Begriff Kühlwaren gebraucht, wobei die Erfindung allerdings auch in gleicher Weise bei anderen Lagerorten und -Waren verwendet werden kann, die keine Kühlung bereitstellen bzw. erfordern.

Bedürfnisse von Kühlgerät-Benutzern, wie z.B. die automatisierte Erstellung einer Einkaufsliste, einer Vorratsübersicht etc., können über das Aufnehmen von Bildern des Lagerraums und das Erkennen des Inhalts des Kühlgeräts mit technischen Mitteln erfüllt werden, indem in dem Lagerraum befindliche Kühlwaren erfasst und die Zugänge und Abgänge fortlaufend protokolliert werden. Für die Erkennung der Kühlwaren werden Mittel, z.B. Algorithmen, welche auf künstlicher Intelligenz (KI) basieren, eingesetzt. Daher wird nachfolgend von einem KI-System gesprochen.

Es kann jedoch vorkommen, dass die Erkennung fehlerhaft ist und eine falsche Kühlware den Bildern zugeordnet wird. Die falsche Zuordnung führt zu Fehlern in den nachfolgenden Applikationen wie der automatisiert erstellten Einkaufsliste, Vorratsübersicht, usw., da diese auf den Ergebnissen der Bilderkennung beruhen. Die falsche Erkennung führt damit zu spürbaren Nachteilen bei den Benutzern und im schlimmsten Fall letztendlich zur Ablehnung des KI-Systems durch den Benutzer. Daher ist es erforderlich, die Falscherkennung soweit wie möglich zu vermeiden.

Der offensichtliche Weg zur Vermeidung der Falscherkennung ist die Verstärkung der eingesetzten Ressourcen, wie z.B. der Verwendung einer Kamera mit besserer Auflösung, dem Einsatz einer zusätzlichen Steuerung der Lichtverhältnisse, die Verarbeitung von mehr Bildern beim Training des KI-Systems, mehr Rechenleistung bei der klassischen Bildbearbeitung für Rechenaufgaben wie bspw. Fast Fourier Transformation als Teil der Bilderkennung, usw. Dieser herkömmliche Ansatz ist ersichtlich nachteilig, aufgrund der damit einhergehenden erhöhten Kosten, der nötigen höheren Computer-Rechenleistung und der Menge der zu generierten und zu übertragenden und zu verarbeitenden Daten.

Der Erfindung stellt sich somit das Problem, ein Kamerasystem für ein Kühlgerät und ein Kühlgerätsystem, bereitzustellen, die einen leistungsstarken Bildverarbeitungsprozess zur Kühlwarenerkennung in dem Kühlgerät aufweisen, der auf einer Aufnahme einer Bilderfolge in der Bewegung basiert.

Erfindungsgemäß wird dieses Problem durch ein Kamerasystem für dein Kühlgerät oder ein Kühlgerätsystem mit den Merkmalen des Patentanspruchs 1 gelöst. Vorteilhafte Ausgestaltungen und Weiterbildungen der Erfindung ergeben sich aus den nachfolgend erläuterten Unteransprüchen.

Die mit der Erfindung erreichbaren Vorteile bestehen neben einer effizienten Erhöhung der Trefferquote in der Erkennung darin, dass Ressourcen wie Rechenleistung, Hardwarekomplexität, Rechenzeit, Netzwerkkapazität, Bandbreite, Stromverbrauch, Zahl von notwendigen Trainingsdaten und/oder Komplexität des Lernprozesses sowohl lokal in dem Kühlgerät bzw. dem Kühlgerätsystem als auch remote bei dem externen Gerät eingespart werden können.

Die Erfindung betrifft ein Kamerasystem für ein Kühlgerät oder Kühlgerätsystem mit einem Kühlgerät, aufweisend einen Gehäusekörper, einen im Gehäusekörper ausgebildeten Lagerraum zum Kühlen von Kühlwaren, und eine Tür, die am Gehäusekörper angeordnet ist und die einen Zugriff in den Lagerraum mit den Kühlwaren erlaubt, wobei das Kamerasystem aufweist
- eine Kamera, die derart angeordnet und eingerichtet ist, um eine Bilderfolge aus dem Lagerraum oder einem Bereich des Lagerraums aufzunehmen;
- ein Rechenmodul, das derart konfiguriert ist, eine Vorverarbeitung der von der Kamera aufgenommenen Bilderfolge unter Erzeugen von Zwischendaten auszuführen;
- ein weiteres Rechenmodul, das konfiguriert ist, ein Erkennen der Kühlwaren anhand der Zwischendaten auszuführen; und
- ein Kommunikationsmodul und/oder eine Schnittstelle, das oder die ausgebildet ist, mit einem externen Gerät und/oder einem Benutzer bidirektional zu kommunizieren.

Erfindungsgemäß ist unter "Bereich des Lagerraums" ein Bereich von Interesse in der direkten Umgebung des Lagerraums, bevorzugt des Zugangsbereichs zum Lagerraum, zu verstehen.

Eine Recheneinheit weist das Rechenmodul und das weitere Rechenmodul in einer modularen Konfiguration auf. Mit dem Rechenmodul und dem weiteren Rechenmodul wird ein modulares Erkennungssystem implementiert. Die einzelnen Rechenmodule laufen dabei bevorzugt voneinander unabhängig und/oder unter Berücksichtigung definierter Datenaustauschpunkte wie Bilderrouting, Fusion, Debug-Loop usw. Durch den modularen Aufbau können optimale Kombinationen aus Methoden der klassischen Bilderkennung und/oder der künstlichen Intelligenz bei der Kühlwarenerkennung eingesetzt werden. Die Flexibilität durch die einzelnen Rechenmodule ermöglicht zudem eine optimale Nutzung verfügbarer Ressourcen. Zudem können die einzelnen Rechenmodule separat nachtrainiert werden. Durch die Trennung können die Berechnungen an unterschiedlichen Orten (z.B. lokale Hardware und Remote-Server) durchgeführt werden.

Die Ressourcen können daher mit der Wahl einer geeigneten Strukturierung und Parallelisierung im Vergleich zu einem einzigen neuronalen Netzwerk / KI-Maschine für die Erkennung von Kühlwaren heruntergebrochen werden. Ressourcen sind dabei die Bandbreite /Geschwindigkeit, Zeit der Datenübertragung, Rechenkapazität der lokalen Hardware, des Remote-Servers usw. Auch eine Echtzeit-Fähigkeit kann so hergestellt werden, was vorteilhaft ist, da ein Echtzeit-Feedback mit dem Benutzer zu bestimmten Funktionen unabdingbar ist. Mit dem Einsatz lokaler Rechenleistung können weiterhin Datenschutz-Aspekte berücksichtigt werden, was die Akzeptanz auf Seiten des Nutzers erhöht. Ein wichtiger Vorteil entsteht auch bei einer Änderung bestimmter Merkmale der Kühlwaren z.B. Logos im Laufe der Zeit, die ein Nachtrainieren der Rechenmodule erfordert. Bei Änderung der Merkmale muss nicht die ganze Recheneinheit neu trainiert werden, sondern nur einzelne Module von ihr. Bei den Trainingsdaten zum Trainieren der Erkennung mit künstlicher Intelligenz muss darauf geachtet werden, dass die Kamera Bilder aus verschiedenen Richtungen wie von oben, seitlich, aus verschiedenen Blickwinkeln und mit verschiedenem Maß von Verdeckung zum Training verwendet werden. Durch das modular aufgebaute System wird die notwendige Zahl solcher Trainingsdaten wesentlich reduziert.

Bevorzugt weist die Kamera die Recheneinheit auf, die das Rechenmodul und das weitere Rechenmodul enthält. Erfindungsgemäß können ein oder mehrere Rechenmodule entweder lokal vorhanden oder alternativ auch in einer Cloud vorgesehen sein. Die Kamera ist bevorzugt ausgebildet, die Bilderfolge aus dem Lagerraum in Bewegung aufzunehmen. D.h., die Kamera ist ausgebildet, die Bilderfolge in der Bewegung aufzunehmen, sobald eine Bewegung im und/oder am Lagerraum sensiert wird. Die Kamera weist bevorzugt einen Sensor auf, der ausgebildet ist, eine Bewegung im und/oder am Lagerraum zu sensieren. Der Sensor kann auch durch die Kamera selbst gebildet sein, d.h. die Bewegung wird mittels der Bilder der Kamera sensiert.

Das Kommunikationsmodul und/oder die Schnittstelle ist oder sind bevorzugt ausgebildet, bidirektional und drahtlos mit dem externen Gerät zu kommunizieren. Das externe Gerät ist bevorzugt ein Netzwerkgerät, ein Endgerät oder ein Remote-Server. Das Kommunikationsmodul und/oder die Schnittstelle ist oder sind bevorzugt ausgebildet, die von der Kamera aufgenommene Bilderfolge, vom Rechenmodul erhaltene Ergebnisse und/oder vom weiteren Rechenmodul erhaltene Ergebnisse an das externe Gerät zu übermitteln und/oder Ergebnisse von dem externen Gerät zu erhalten, die unter Verwendung der Bilderfolge und/oder der Zwischendaten zur Unterstützung der Kühlwarenerkennung berechnet wurden. Dadurch können Ressourcen des Kühlgeräts eingespart werden. Das Kühlgerätsystem enthält neben dem Kühlgerät bevorzugt das Netzwerkgerät, das Endgerät und/oder den Remote-Server als das oder die externen Geräte. Das Endgerät ist beispielsweise ein Computer, Smartphone, Mobiltelefon, Laptop oder Tablet. Der Remote-server ist bevorzugt in einer Cloud-Umgebung implementiert. Die Schnittstelle ist bevorzugt eine Benutzerschnittstelle, so dass das Kühlgerät und der Benutzer direkt kommunizieren können.

In einer bevorzugten Ausführungsform ist das Rechenmodul weiterhin konfiguriert, Bilder und/oder Bildausschnitte aus der Bilderfolge auszuwählen und optional mit Zusatzinformationen zu versehen, und die ausgewählten Bilder und/oder Bildausschnitte, die optional mit Zusatzinformationen versehen sind, als Zwischendaten bereitzustellen. Die Zwischendaten weisen bevorzugt in der Vorverarbeitung aus der Bilderfolge ausgewählte Bilder und/oder Bildausschnitte auf, die optional mit Zusatzinformationen versehen sind. Bevorzugt bestehen die Zwischendaten aus den ausgewählten Bildern und/oder Bildausschnitten, die optional mit Zusatzinformationen versehen sind. Die Zusatzinformationen können Informationen sein, die dem Rechenmodul anderweitig als von der Kamera zur Verfügung gestellte Informationen sind. Die Zusatzinformationen umfassen bevorzugt regionale, saisonale, benutzerspezifische, vom Benutzer eingegebene, vom Benutzer übersendete, in einem Speicher des Kühlgeräts gespeicherte und/oder Datums-Informationen.

Bevorzugt weist das weitere Rechenmodul mehrere parallele Analysemodule auf, die jeweils ausgebildet sind, die Zwischendaten zu analysieren und anhand der Analyse ein oder mehrere Merkmale von Kühlwaren in den Zwischendaten zu erkennen. Diese Zwischendaten, die in der vom Rechenmodul durchgeführten Vorverarbeitung als Ergebnis entstanden sind, bilden den Input für eine zweite Stufe der Bilderkennung, die von dem weiteren Rechenmodul durchgeführt wird. Dazu weist das weitere Rechenmodul bevorzugt die mehreren, miteinander parallel und/oder seriell geschalteten Analysemodule auf. Diese Analysemodule können autonom an unterschiedlichen zu erkennenden Merkmalen zur Kühlwarenerkennung arbeiten, d. h. ohne Datenaustausch untereinander. Es können allerdings auch kontrollierte Wechselwirkungen zwischen den Analysemodulen vorgesehen sein, z.B. ein Bilderrouting; d.h., dass eine von einem Analysemodul ausgeführte Analyse und/oder ein Algorithmus Bilder und/oder Bildausschnitte für eine andere, von einem anderen Analysemodul durchgeführte Analyse priorisiert oder selektiert. Die Analysemodule können mit klassischen Bilderkennungsmethoden oder mit Hilfe von Algorithmen künstlicher Intelligenz arbeiten.

In einer bevorzugten Ausführungsform ist oder sind das eine oder die mehreren Merkmale: Logo, Logoposition, Marke, Text, Barcode, QR-Code, Farbe und/oder Form des oder der sich in dem Lagerraum befindenden Kühlwaren. Kühlwaren weisen oft solche Merkmale auf und sind daran erkennbar. Bevorzugt sind die Merkmale, die durch die Analysemodule erkannt werden, Logo, Marke, Text, Barcode und/oder Grundtyp wie die Form z.B. Becher, Tetrapak, Flasche, Gemüse, Obst usw. Alternativ bevorzugt können die Merkmale sein: Gemüse, Farbe, Marke, Form, Logoposition, Logo und/oder Text.

Üblicherweise erleichtert ein hoher Kontrast des Logos zur Verpackung die Erkennung, deshalb wird darauf in der Erkennung mit klassischer Bilderkennung und/oder schon in der Vorverarbeitung geachtet. D.h., das weitere Rechenmodul ist bevorzugt konfiguriert, Bilder und/oder Bildausschnitte auszuwählen, die eine Kühlware mit einem Logo aufweisen. Das Merkmal ist bevorzugt Logo.

Form-Elemente wie rund, oval, Ecke, Rechteck usw. können auch mit klassischer Bilderkennung erkannt werden. Daher ist das Merkmal bevorzugt eine/die Form.

Wörter haben einen unterschiedlichen Stellenwert, sie können z. B. Teil einer Marke sein wie eine Bildmarke mit Textelementen bzw. eine Wort/Bild-Marke, oder z. B. Hinweise zur Produktkategorie liefern wie beispielsweise das Wort "fettarm" bei Milchprodukten. Deshalb ist es vorteilhaft, erkannte Wörter in mehreren verschiedenen Analysemodulen und/oder in einem nachstehend beschriebenen Fusionsmodul bei der Fusion der Informationen der Analysemodule zu verwenden.

Bevorzugt sind die Merkmale, die von dem weiteren Rechenmodul erkannt werden, Text und Logo. Das parallele Erkennen von Text und Logo hat sich als sehr vorteilhaft erwiesen. Bevorzugt ist das weitere Rechenmodul konfiguriert, von den mehreren parallelen Analysemodulen ausgegebene Ergebnisse miteinander zu verknüpfen. Die Verknüpfung kann einen multiplikativen Charakter haben. D.h., die Ergebnisse können einander verstärken oder auslöschen durch ein Killerkriterium.

Von Modulen ausgegebene Ergebnisse stellen Zwischendaten dar. Die Zwischendaten ändern sich mit dem Durchlauf durch diverse Module des Rechenmoduls und des weiteren Rechenmoduls.

In einer bevorzugten Ausführungsform weist das weitere Rechenmodul ein Fusion-Modul auf, das konfiguriert ist, aus den mehreren parallel geschalteten Analysemodulen ausgegebene Ergebnisse eine Fusion-Analyse zu bilden, und auf Basis der Fusions-Analyse die ausgewählten Bilder und/oder Bildausschnitte den sich optional in dem Kühlgerät befindenden Kühlwaren zuzuordnen und dies(e) anhand der Zuordnung zu erkennen. Bevorzugt ist die Kamera, das Kühlgerät oder das Kühlgerätsystem ausgebildet, die Entscheidung in Anwendungen bzw. Applikationen wie dem automatisierten Erstellen einer Vorratsübersicht, einer Einkaufliste usw. zu verwenden, auf der Benutzerschnittstelle anzuzeigen und/oder an ein Endgerät des Benutzers zu übermitteln.

Die Ergebnisse der Analysemodule können beispielsweise in einem neuronalen Netz als Fusion gebildet werden. Dabei ist das Fusion-Modul ausgebildet, die Entscheidung zu der Erkennungsaufgabe., d.h. die Zuordnung der Bilder und/oder Bildausschnitten zu den optional im Lagerraum befindlichen Kühlwaren zu treffen. Bevorzugt ist das Fusion-Modul ausgebildet, Wahrscheinlichkeiten abzuleiten, die die Erkennung und/oder Entscheidung unterstützen, so dass zu den einzelnen Analysen Wahrscheinlichkeitswerte für die erkannten Kühlwaren erzeugt werden, die den Grad der Konfidenz bei der Kühlwarenerkennung darstellen. Dabei können statistische Methoden, Methoden der Wahrscheinlichkeitstheorie wie zum Beispiel Bayes Theorem oder auch die Fuzzy Set Theory zum Einsatz kommen.

Bevorzugt weist die Kamera oder das Kühlgerät oder der Remote-Server einen Speicher zum Speichern der Zwischendaten auf. Bevorzugt ist der Speicher ausgebildet, die vom Rechenmodul bereitgestellten Zwischendaten zu speichern und die während der Verarbeitung im weiteren Rechenmodul erhaltenen Zwischendaten in Form der Ergebnisse zu speichern, die von diversen Modulen wie den Analyse-, Fusion- und/oder nachstehend beschriebenen Erkennungs- Fusion-Analysemodulen erhalten werden. Im Falle einer falschen Identifizierung einer Kühlware und dementsprechende Rückmeldung vom Benutzer über die Benutzerschnittstelle oder das Endgerät kann auf die Zwischendaten zurückgegriffen werden, die während des Entscheidungsprozesses entstanden sind, so dass das Rechenmodul und/oder das weitere Rechenmodul eine zweite Schleife und/oder Korrekturschleife durchführen können, wobei bevorzugt die "zweitplatzierten" Ergebnisse und/oder Vorschläge verwendet werden. In einer bevorzugten Ausführungsform ist oder sind das Rechenmodul und/oder das weitere Rechenmodul konfiguriert, im Falle einer Rückmeldung einer Fehlerkennung von einem Benutzer eine Korrekturschleife auszuführen. Dadurch wird eine Erkennungsqualität weiterhin verbessert.

Bevorzugt ist das weitere Rechenmodul ausgebildet, eine begrenzte Anzahl an Bildern der aufgenommenen Bilderfolge zu verwenden, die ihm von dem Rechenmodul in Form der Zwischendaten bereitgestellt werden. Dadurch werden weiterhin die Ressourcen geschont und der Rechenprozess beschleunigt. Das weitere Rechenmodul ist bevorzugt ausgebildet, im Falle einer ungeraden Zahl von Bildern die Entscheidung zum Beispiel anhand von Mehrheitsverhältnissen zu treffen. Das weitere Rechenmodul kann alternativ bevorzugt ausgebildet sein, die Konfidenzwerte der Bilderkennung in Betracht zu ziehen. Dies ist vorteilhaft. Beispielsweise weist eine vom weiteren Rechenmodul durchgeführte Analyse von zwei aus drei Bildern mit niedriger Konfidenz darauf hin, dass es sich bei der Kühlware um einen Himbeerjogurt handelt, während sich aus der Analyse des dritten Bildes sich jedoch eine hohe Konfidenz ergibt, dass es die Kühlware ein Erdbeerjogurt ist, weil im dritten Bild der entsprechende Text erkennbar ist. Hier ist eine Entscheidung auf Basis von Konfidenzwerten vorteilhafter als eine einfache Mehrheitsentscheidung.

In einer bevorzugten Ausführungsform weist das weitere Rechenmodul mehrere parallele Erkennungsmodule auf, die jeweils ausgebildet sind, in den Zwischendaten in Form der ausgewählten Bilder und/oder Bildausschnitte eine menschliche Hand und/oder die eine oder die mehreren sich in dem Kühlgerät befindenden Kühlwaren zu erkennen. Ferner ist das weitere Rechenmodul bevorzugt ausgebildet, aus den Zwischendaten die ausgewählten Bilder und/oder Bildausschnitte zu entfernen, wenn keine menschliche Hand und keine Kühlware auf ihnen erkannt wird, und die ausgewählten Bilder und/oder Bildausschnitte als Zwischendaten zu belassen, wenn eine menschliche Hand und ein Objekt auf ihnen erkannt werden. Bevorzugt ist das weitere Rechenmodul ausgebildet, die belassenen Zwischendaten den mehreren parallelen Analysemodulen bereitzustellen. Die Erkennungsmodule können alternativ oder zusätzlich bevorzugt ausgebildet sein, einen Text und/oder einen Barcode auf Kühlwaren zu erkennen.

Bevorzugt weist das weitere Rechenmodul ein Fusion-Analysemodul auf. Das Fusion-Analysemodul ist bevorzugt ausgebildet, Ergebnisse der Erkennungsmodule zusammenzuführen. Das Fusion-Analysemodul ist weiterhin bevorzugt ausgebildet, eine Gewichtung der Ergebnisse durchzuführen.

Bevorzugt ist das weitere Rechenmodul konfiguriert, in dem Fall, in dem die mehreren parallelen Erkennungsmodule keine menschliche Hand und keine Kühlware in den Zwischendaten in Form der ausgewählten Bilder und/oder Bildausschnitte erkennen, das Rechenmodul anzusprechen, so dass dieses die Vorverarbeitung der Bilderfolge erneut ausführen, um erneut Zwischendaten zu erzeugen. Alternativ oder zusätzlich bevorzugt ist das Fusion-Analysemodul ausgebildet, eine Debug-Information zu bilden, die angibt, dass in den Erkennungsmodulen keine Kühlware, keine Hand, kein Text und/oder kein Barcode erkannt werden konnten. Das weitere Rechenmodul ist bevorzugt ausgebildet, die Debug-Infomation dem Rechenmodul zu übermitteln, so dass diese Information der Vorverarbeitung zurückgeführt wird und diese steuert. Sie kann auch als Steuerung der Benutzerschnittstelle verwendet werden. Bevorzugt weist die Recheneinheit und das weitere Rechenmodul ein Debug-Modul bzw. einen Debugger auf.

In einer weiteren vorteilhaften Ausführungsform weist das weitere Rechenmodul zusätzlich ein Routing-Modul auf, das konfiguriert ist, die Zwischendaten mittels Routing jeweils einem oder mehreren Analysemodulen der mehreren parallelen Analysemodulen zuzuführen. Beispielsweise können an einer Gesamtszene eines ausgewählten Bildes mehrere Algorithmen der mehreren Analysemodule unterschiedlich arbeiten. So kann z. B. ein Textbaustein im Logo/Marke-Analysemodul zum Analysieren von Logos und Marken als Logo erkannt werden und parallel dazu von einem weiteren Analysemodul mit einer Texterkennung wie OCR (Optical Character Recognition) analysiert werden. Dabei wird vorteilhaft das Routing-Modul eingesetzt, so dass Bilder-Routings entscheiden, welche Bilder zu welchen Analysemodulen und/oder zu welchen Algorithmen zugeführt werden.

Bevorzugt weist das weitere Rechenmodul weiterhin ein Business-Modul auf, das konfiguriert ist, die Zwischendaten bzw. Ergebnisse, die ihm beispielsweise von dem Fusion-Modul bereitgestellt werden mit einem Bestand abzugleichen. Dadurch wird weiterhin die Erkennungsgenauigkeit verbessert. Der Bestand ist beispielsweise in dem Speicher gespeichert und/oder aus einer zeitlich vorangehend durchgeführten Kühlwarenerkennung bekannt.

In einer bevorzugten Ausführungsform sind die einzelnen Module jeweils einzeln trainierbar. Bevorzugt sind das Rechenmodul und das weitere Rechenmodul jeweils individuell trainierbar. Weiterhin bevorzugt sind die mehreren parallelen Analysemodule und die mehreren parallelen Erkennungsmodule jeweils einzeln trainierbar. Dadurch werden zusätzlich Ressourcen eingespart.

Bevorzugt ist die Kamera oder das Kühlgerät konfiguriert, das Rechenmodul anzusprechen und dem Rechenmodul die aufgenommene Bilderfolge zur Vorverarbeitung bereitzustellen, wenn ein vorbestimmter Parameter kleiner als ein vorbestimmter Parameter-Schwellenwert ist, und die aufgenommene Bilderfolge dem externen Gerät zu übermitteln, wenn der jeweilige vorbestimmte Parameter gleich oder größer als der vorbestimmte Parameter-Schwellenwert ist. Bevorzugt ist das Kühlgerät weiterhin konfiguriert, das weitere Rechenmodul anzusprechen und dem weiteren Rechenmodul die Zwischendaten zur Erkennung bereitzustellen, wenn ein weiterer vorbestimmter Parameter kleiner als ein weiterer vorbestimmter Parameter-Schwellenwert ist, und die Zwischendaten dem externen Gerät zu übermitteln, wenn der weitere vorbestimmte Parameter gleich oder größer als der weitere vorbestimmte Parameter-Schwellenwert ist. Dadurch können die Aufgaben und /oder die Rechenleistung zum Erkennen von Kühlwaren in dem Lagerraum zwischen lokalen Einheiten wie dem lokalen Rechenmodul und dem weiteren Rechenmodul des Kühlgeräts, einem lokal vom Benutzer benutzten Endgerät oder Netzwerkgerät und einem Remote-Server aufgeteilt werden. Dadurch können das Rechenmodul und das weitere Rechenmodul stromsparend betrieben werden, damit sie seltener aufgeladen werden müssen, wenn sie per Akku betrieben werden. Ferner kann ein Strombedarf für die Rechenleistung des Rechenmoduls und des weiteren Rechenmoduls so niedrig gehalten werden, dass die Kamera ohne Stromkabel betrieben werden kann. Das Rechenmodul und das weitere Rechenmodul sind bevorzugt in der Kamera angeordnet. Der für das Rechenmodul und das weitere Rechenmodul jeweils vorbestimmte Parameter kann ausgewählt sein aus der Gruppe, Rechenleistung, Netzgeschwindigkeit, Antwortzeiten und/oder Datenschutzerfordernisse. Datenschutzerfordernisse können es vorschreiben, dass persönliche Angaben und Präferenzen nur lokal d.h. entweder vom Kühlgerät, dem Endgerät oder dem Netzwerkgerät verarbeitet werden dürfen. Die Aufteilung der Aufgaben und/oder Rechenleistung zur Kühlwarenerkennung kann zwischen lokalen und remote Ressourcen auch adaptiv erfolgen.

Ein Ausführungsbeispiel der Erfindung ist in den Zeichnungen rein schematisch dargestellt und wird nachfolgend näher beschrieben. Es zeigt rein schematisch
- Fig. 1: eine Skizzen-Darstellung einer Recheneinheit eines erfindungsgemäßen Kühlgerät; und
- Fig. 2: eine Skizzen-Darstellung einer Recheneinheit eines weiteren erfindungsgemäßen Kühlgeräts.

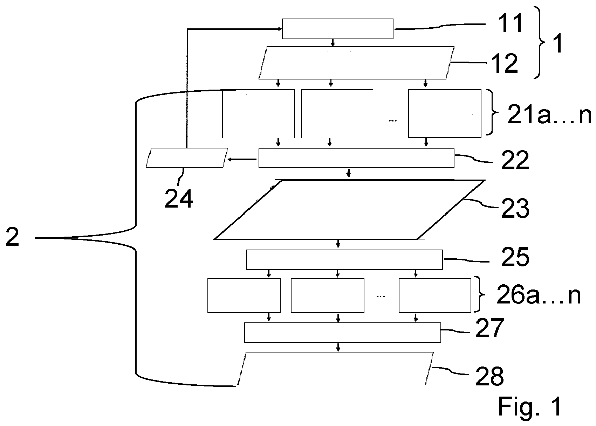

Fig. 1 zeigt eine Skizzen-Darstellung einer Recheneinheit eines erfindungsgemäßen Kühlgeräts, der auch einen Bestandteil eines Kühlgerätsystems bilden kann. Das Kühlgerät weist einen Gehäusekörper (nicht gezeigt) und einen im Gehäusekörper ausgebildeten Lagerraum (nicht gezeigt) zum Kühlen von Kühlwaren, eine Tür (nicht gezeigt), die am Gehäusekörper angeordnet ist und die einen Zugriff in den Lagerraum mit den Kühlwaren erlaubt, eine Kamera (nicht gezeigt), die derart angeordnet und eingerichtet ist, um eine Bilderfolge aus dem Lagerraum aufzunehmen, und ein Kommunikationsmodul (nicht gezeigt) und/oder eine Schnittstelle (nicht gezeigt) auf, das oder die ausgebildet ist, mit einem externen Gerät (nicht gezeigt) und/oder einem Benutzer (nicht gezeigt) bidirektional zu kommunizieren. Ferner weist das Kühlgerät die Recheneinheit auf, die ausgebildet ist, ein Verfahren zur Erkennung von sich in dem Lagerraum befindenden Kühlwaren durchzuführen und die modular aufgebaut ist. Die Recheneinheit weist ein Rechenmodul 1 auf, das derart konfiguriert ist, eine Vorverarbeitung der von der Kamera aufgenommenen Bilderfolge unter Erzeugen von Zwischendaten auszuführen. Weiterhin weist die Recheneinheit ein weiteres Rechenmodul 2 auf, das konfiguriert ist, ein Erkennen der Kühlwaren anhand der Zwischendaten auszuführen. Die Kamera nimmt Bilderfolgen in Bewegung auf. D.h., bei sensierter Bewegung im und/oder am Lagerraum.

Das Rechenmodul 1 weist ein Vorverarbeitungsmodul 11 auf, das ausgebildet ist, Bilder und/oder Bildausschnitte aus der von der Kamera aufgenommenen Bilderfolge auszuwählen und optional mit Zusatzinformationen wie regionalen, saisonalen, benutzerspezifischen Informationen zu versehen. Die erzeugten Zwischendaten in Form der Bilder und/oder Bildausschnitte und optional den Zusatzinformationen werden einem Bereitstellungsmodul 12 beispielsweise einem Speicher, der die Zwischendaten speichert, zugeführt und von diesem dem weiteren Rechenmodul 2 bereitgestellt. Insbesondere werden die Zwischendaten mehreren parallel geschalteten Erkennungsmodulen 21a... n bereitgestellt, die jeweils ausgebildet sind, in den Zwischendaten in Form der ausgewählten Bilder und/oder Bildausschnitte eine menschliche Hand oder die eine oder die mehreren sich in dem Kühlgerät befindenden Kühlwaren zu erkennen. Sie sind ferner konfiguriert, aus den Zwischendaten die bereitgestellten Bilder und/oder Bildausschnitte zu entfernen, wenn keine menschliche Hand und keine Kühlware auf ihnen erkannt wird, und die bereitgestellten Bilder und/oder Bildausschnitte als Zwischendaten zu belassen, wenn eine menschliche Hand oder eine Kühlware auf ihnen erkannt wird. Ergebnisse der Erkennungsmodule 21a... n werden einem Fusion-Analysemodul 22 des weiteren Rechenmoduls 2 zugeführt. Das Fusion-Analysemodul 22 ist ausgebildet, die Ergebnisse der Erkennungsmodule 21a...n zusammenzuführen und eine Gewichtung der Ergebnisse durchzuführen. In dem Fall, in dem das Fusion-Analysemodul 22 keine menschliche Hand, keine Kühlware, kein Text und/oder kein Barcode in den Zwischendaten in Form der ausgewählten Bilder und/oder Bildausschnitte erkennen, übermittelt ein Debug-Modul 24 dem Vorverarbeitungsmodul 11 eine Debug-Information. In dem Fall, in dem das Fusion-Analysemodul 22 eine menschliche Hand oder eine Kühlware erkennt, stellt sie in einem Bereitstellungsmodul 23 ihre Ergebnisse als Zwischendaten bereit. Das Bereitstellungsmodul 23 kann ein Speicher sein, der die Zwischendaten speichert. Das Bereitstellungsmodul 23 ist ausgebildet, die Zwischendaten optional einem Routing-Modul 25 bereitzustellen, das konfiguriert ist, Bilder-Routings einzusetzen, die entscheiden, welche Zwischendaten bzw. Bilder und/oder Bildausschnitte zu welchen Algorithmen von Analysemodulen 26a... n des weiteren Rechenmodul 2 zugeführt werden. Alternativ ist das Bereitstellungsmodul 23 ausgebildet, die Zwischendaten direkt den Analysemodulen 26a... n bereitzustellen, was hier nicht gezeigt ist. Die Analysemodule 26a...n sind jeweils konfiguriert, die Zwischendaten zu analysieren und anhand der Analyse ein oder mehrere Merkmale von Kühlwaren in den Zwischendaten zu erkennen. Das eine oder die mehreren Merkmale ist oder sind: Logo, Logoposition, Marke, Text, Barcode, QR-Code, Farbe und/oder Form des oder der sich in dem Lagerraum befindenden Kühlwaren. Ergebnisse der Analysemodule 26a... n werden einem Fusion-Modul 27 des weiteren Rechenmoduls 2 zugeführt, das konfiguriert ist, aus den mehreren parallel geschalteten Analysemodulen 26a... n ausgegebenen Ergebnisse eine Fusion-Analyse zu bilden, und auf Basis der Fusions-Analyse die ausgewählten Bilder und/oder Bildausschnitte den sich optional in dem Kühlgerät befindenden Kühlwaren zuzuordnen und dies(e) anhand der Zuordnung zu erkennen. Ergebnisse des Fusion-Moduls 27 werden einem Bereitstellungsmodul 28 des weiteren Rechenmoduls 2 zugeführt, das die von dem Fusion-Modul 27 erhaltenen Ergebnisse als Erkennungsdaten für Applikationen wie beispielsweise eine automatisch generierte Einkaufsliste bereitstellt.

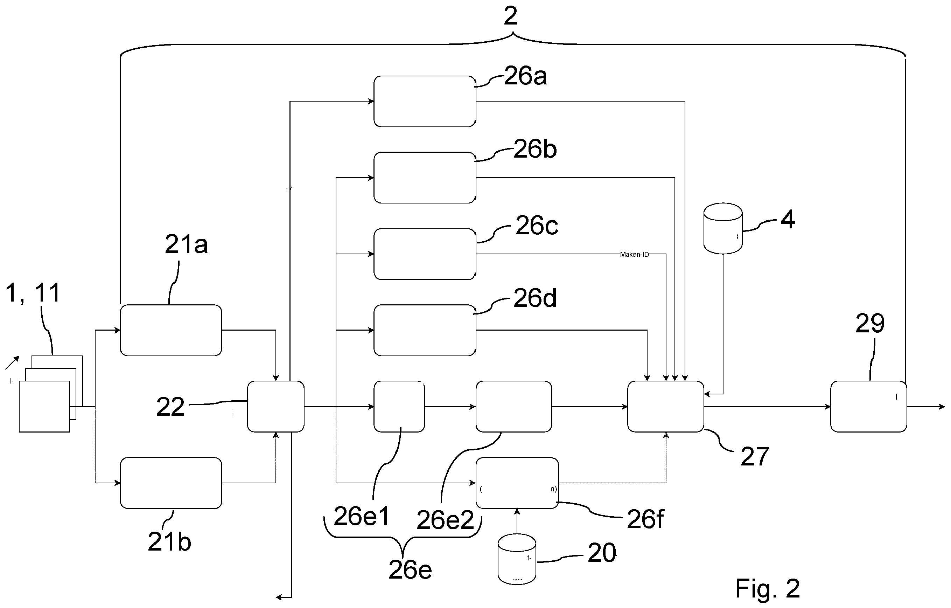

Fig. 2 zeigt eine Skizzen-Darstellung einer weiteren Recheneinheit eines weiteren erfindungsgemäßen Kühlgeräts, das auch ein Element eines Kühlgerätsystems bilden kann. Das Kühlgerät entspricht dem zu Fig. 1 beschriebenen Kühlgerät mit dem Unterschied, dass die Recheneinheit anders ausgebildet ist. Nachfolgend wird daher nur auf die Unterschiede eingegangen, um Wiederholungen zu vermeiden.

Die Recheneinheit ist ausgebildet, ein Verfahren zur Erkennung von sich in dem Lagerraum befindenden Kühlwaren durchzuführen. Sie ist modular aufgebaut und weist ein Rechnungsmodul 1 auf, das derart konfiguriert ist, eine Vorverarbeitung der von der Kamera aufgenommenen Bilderfolge unter Erzeugen von Zwischendaten auszuführen. Weiterhin weist die Recheneinheit ein weiteres Rechenmodul 2 auf, das konfiguriert ist, ein Erkennen der Kühlwaren anhand der Zwischendaten auszuführen.

Das Rechenmodul 1 weist ein Vorverarbeitungsmodul 11 auf, das ausgebildet ist, Bilder und/oder Bildausschnitte aus einer von der Kamera aufgenommenen Bilderfolge auszuwählen und optional mit Zusatzinformationen wie regionalen, saisonalen, benutzerspezifischen Informationen zu versehen. Die erzeugten Zwischendaten in Form der Bilder und/oder Bildausschnitte, wie symbolhaft dargestellt, werden dem weiteren Rechenmodul 2 bereitgestellt. Insbesondere werden die Zwischendaten zwei parallel geschalteten Erkennungsmodulen 21a und 21b bereitgestellt. Das Erkennungsmodul 21a ist ausgebildet, in den Zwischendaten in Form der ausgewählten Bilder und/oder Bildausschnitte eine menschliche Hand und/oder das eine oder die mehreren sich in dem Kühlgerät befindenden Kühlwaren zu erkennen und aus den Zwischendaten die ausgewählten Bilder und/oder Bildausschnitte entfernen, wenn keine menschliche Hand und keine Kühlware auf ihnen erkannt wird, und die ausgewählten Bilder und/oder Bildausschnitte als Zwischendaten zu belassen, wenn eine menschliche Hand oder eine Kühlware auf ihnen erkannt wird. Das Erkennungsmodul 21b ist ausgebildet, in den Zwischendaten in Form der ausgewählten Bilder und/oder Bildausschnitte Logoposition auf den Kühlwaren zu erkennen und aus den Zwischendaten die ausgewählten Bilder und/oder Bildausschnitte entfernen, wenn keine Logoposition auf ihnen erkannt wird, und die ausgewählten Bilder und/oder Bildausschnitte als Zwischendaten zu belassen, wenn eine Logoposition auf ihnen erkannt wird. Ergebnisse oder Zwischendaten der Erkennungsmodule 21a, 21b werden einem Fusion-Analysemodul 22 des weiteren Rechenmoduls 2 zugeführt. Das Fusion-Analysemodul 22 ist ausgebildet, die Ergebnisse der Erkennungsmodule 21a, 21b zusammenzuführen und eine Gewichtung der Ergebnisse durchzuführen. In dem Fall, in dem das Fusion-Analysemodul 22 keine menschliche Hand, keine Kühlware und keine Logoposition in den Zwischendaten in Form der ausgewählten Bilder und/oder Bildausschnitte erkennen, versendet es eine Debug-Information. In dem Fall, in dem das Fusion-Analysemodul 22 eine menschliche Hand, eine Kühlware oder eine Logoposition in den Zwischendaten in Form der ausgewählten Bilder und/oder Bildausschnitte erkennt, führt sie ihre Ergebnisse bzw. Zwischendaten mehreren parallel geschalteten Analysemodulen 26a, 26b, 26c, 26d, 26e, 26f des weiteren Rechenmoduls 2 zu, die jeweils ausgebildet sind, die Zwischendaten zu analysieren und anhand der Analyse ein oder mehrere Merkmale von Kühlwaren in den Zwischendaten zu erkennen. Das Analysemodul 26a ist konfiguriert, die Zwischendaten beispielsweise anhand eines Gemüsemodells zu analysieren und Gemüse zu erkennen, während das Analysemodul 26b konfiguriert ist, die Zwischendaten anhand eines Farbmodells zu analysieren und Farben zu erkennen, das Analysemodul 26c konfiguriert ist, die Zwischendaten anhand eines Markenmodell zu analysieren und Marken zu erkennen und das Analysemodul 26d konfiguriert ist, die Zwischendaten anhand einer Formerkennung zu analysieren und Formen zu erkennen. Das Analysemodul 26a weist zwei hintereinander geschaltete Analysemodule 26e1, 26e2 auf. Das Analysemodul 26e1 ist konfiguriert eine Logoposition zu analysieren und zu erkennen, während das Analysemodul 26e2 konfiguriert ist, eine Logoerkennung durchzuführen. Das Analysemodul 26f ist konfiguriert, eine OCR bzw. Texterkennung durchzuführen mit Hilfe einer Datenbank 3 in Form einer Produkt-Text-Datenbank. Ergebnisse der Analysemodule 26a-26f werden einem Fusion-Modul 27 des weiteren Rechenmoduls 2 zugeführt, das konfiguriert ist, aus von den mehreren parallel geschalteten Analysemodulen 26a-26f ausgegebenen Ergebnissen eine Fusion-Analyse mit Hilfe einer weiteren Datenbank 4 in Form einer Lebensmittel-Datenbank zu bilden, und auf Basis der Fusions-Analyse die ausgewählten Bilder und/oder Bildausschnitte den sich optional in dem Kühlgerät befindenden Kühlwaren zuzuordnen und dies(e) anhand der Zuordnung zu erkennen. Ergebnisse des Fusion-Moduls 27 werden einem Business-Modul 29 des weiteren Rechenmoduls 2 zugeführt, dass die von dem Fusion-Modul 27 erhaltenen Ergebnisse mit einem Bestand abgleicht und seine Ergebnisse zur weiteren Verwendung bereitstellt.

### Bezugszeichenliste

- 1: Rechenmodul
- 11: Vorverarbeitungsmodul
- 12: Bereitstellungsmodul
- 2: weiteres Rechenmodul
- 21a... n: Erkennungsmodule
- 22: Fusion-Analysemodul
- 23: Bereitstellungsmodul
- 24: Debug-Modul
- 25: Routing-Modul
- 26a... n: Analysemodule
- 27: Fusion-Modul
- 28: Bereitstellungsmodul
- 29: Business-Modul
- 3: Datenbank
- 4: weitere Datenbank

## Patentansprüche

1. Kamerasystem für einen Haushaltslagerort für Waren, bevorzugt ein Kühlgerät oder Kühlgerätsystem mit einem Kühlgerät, aufweisend einen Gehäusekörper, einen im Gehäusekörper ausgebildeten Lagerraum zum Kühlen von Kühlwaren, und eine Tür, die am Gehäusekörper angeordnet ist und die einen Zugriff in den Lagerraum mit den Kühlwaren erlaubt, wobei das Kamerasystem aufweist
- eine Kamera, die derart angeordnet und eingerichtet ist, um eine Bilderfolge aus dem Lagerraum oder einem Bereich des Lagerraums aufzunehmen;
- ein Rechenmodul (1), das derart konfiguriert ist, eine Vorverarbeitung der aufgenommenen Bilderfolge unter Erzeugen von Zwischendaten auszuführen;
- ein weiteres Rechenmodul (2), das konfiguriert ist, ein Erkennen der Kühlwaren anhand der Zwischendaten auszuführen; und
- ein Kommunikationsmodul und/oder eine Schnittstelle, das oder die ausgebildet ist, mit einem externen Gerät und/oder einem Benutzer bidirektional zu kommunizieren.

2. Kamerasystem nach Anspruch 1, **dadurch gekennzeichnet, dass** das Rechenmodul (1) weiterhin konfiguriert ist, Bilder und/oder Bildausschnitte aus der von der Kamera aufgenommenen Bilderfolge auszuwählen und optional mit Zusatzinformationen zu versehen, und die ausgewählten Bilder und/oder Bildausschnitte, die optional mit Zusatzinformationen versehen sind, als Zwischendaten bereitzustellen.

3. Kamerasystem nach Anspruch 1 oder 2, **dadurch gekennzeichnet, dass** das weitere Rechenmodul (2) mehrere parallele Analysemodule (26a... n) aufweist, die jeweils ausgebildet sind, die Zwischendaten zu analysieren und anhand der Analyse ein oder mehrere Merkmale von Kühlwaren in den Zwischendaten zu erkennen.

4. Kamerasystem nach Anspruch 3, **dadurch gekennzeichnet, dass** das eine oder die mehreren Merkmale ist oder sind: Logo, Logoposition, Marke, Text, Barcode, QR-Code, Farbe und/oder Form des oder der sich in dem Lagerraum befindenden Kühlwaren.

5. Kamerasystem nach Anspruch 3 oder 4, **dadurch gekennzeichnet, dass** das weitere Rechenmodul (2) konfiguriert ist, von den mehreren parallelen Analysemodulen (26a... n) ausgegebene Ergebnisse miteinander zu verknüpfen.

6. Kamerasystem nach einem der vorangehenden Ansprüche 3 bis 5, **dadurch gekennzeichnet, dass** das weitere Rechenmodul (2) ein Fusion-Modul (27) aufweist, das konfiguriert ist, aus von den mehreren parallel geschalteten Analysemodulen (27a... n) ausgegebenen Ergebnissen eine Fusion-Analyse zu bilden, und auf Basis der Fusions-Analyse die ausgewählten Bilder und/oder Bildausschnitte den sich optional in dem Kühlgerät befindenden Kühlwaren zuzuordnen und dies(e) anhand der Zuordnung zu erkennen.

7. Kamerasystem nach einem der vorangehenden Ansprüche 2 bis 6, **dadurch gekennzeichnet, dass** das weitere Rechenmodul (2) ausgebildet ist, eine begrenzte Anzahl an Bildern der aufgenommenen Bilderfolge zu verwenden.

8. Kamerasystem nach einem der vorangehenden Ansprüche 2 bis 7, **dadurch gekennzeichnet, dass** das weitere Rechenmodul (2), mehrere parallele Erkennungsmodule (21a...n) aufweist, die jeweils ausgebildet sind, in den Zwischendaten in Form der ausgewählten Bilder und/oder Bildausschnitte eine menschliche Hand und/oder das eine oder die mehreren sich in dem Kühlgerät befindenden Kühlwaren zu erkennen, aus den Zwischendaten die ausgewählten Bilder und/oder Bildausschnitte zu entfernen, wenn keine menschliche Hand und keine Kühlware auf ihnen erkannt wird, und die ausgewählten Bilder und/oder Bildausschnitte als Zwischendaten zu belassen, wenn eine menschliche Hand und ein Objekt auf ihnen erkannt wird, und die belassenen Zwischendaten den mehreren parallelen Analysemodulen bereitzustellen.

9. Kamerasystem nach Anspruch 8, **dadurch gekennzeichnet, dass** das weitere Rechenmodul (2) konfiguriert ist, in dem Fall, in dem die mehreren parallelen Erkennungsmodule (21a... n) keine menschliche Hand und keine Kühlware in den Zwischendaten in Form der ausgewählten Bilder und/oder Bildausschnitte erkennen, das Rechenmodul (1) anzusprechen, so dass dieses erneut Zwischendaten erzeugt.

10. Kamerasystem nach einem der vorangehenden Ansprüche 3 bis 9, **gekennzeichnet durch** ein Routingmodul (25), das konfiguriert ist, die Zwischendaten mittels Routing jeweils einem oder mehreren Analysemodulen der mehreren parallelen Analysemodule (26a... n) zuzuführen.

11. Kamerasystem nach einem der vorangehenden Ansprüche, **dadurch gekennzeichnet, dass** das die mehreren parallelen Analysemodule (26a... n) und die mehreren parallelen Erkennungsmodule (21a...n) jeweils einzeln trainierbar sind.

12. Kamerasystem nach einem der vorangehenden Ansprüche, **dadurch gekennzeichnet, dass** das Rechenmodul (1) und/oder das weitere Rechenmodul (2) konfiguriert ist oder sind, im Falle einer Rückmeldung einer Fehlerkennung von einem Benutzer eine Korrekturschleife auszuführen.

13. Kamerasystem nach einem der vorangehenden Ansprüche, **dadurch gekennzeichnet, dass** dieses konfiguriert ist, das Rechenmodul (1) und/oder das weitere Rechenmodul (2) anzusprechen, und dem Rechenmodul (1) die aufgenommene Bilderfolge zur Vorverarbeitung bzw. dem weiteren Rechenmodul (2) die Zwischendaten zur Erkennung jeweils unabhängig voneinander bereitzustellen, wenn jeweils ein vorbestimmter Parameter kleiner als ein jeweiliger vorbestimmter Parameter-Schwellenwert ist, und die aufgenommene Bilderfolge bzw. die Zwischendaten dem externen Gerät zu übermitteln, wenn der jeweilige vorbestimmte Parameter gleich oder größer als der jeweilige vorbestimmte Parameter-Schwellenwert ist.
